Europäisches Patentamt

European Patent Office

Office européen des brevets

(19)

(11) Publication number:

**0 087 028**
**B1**

(12) **EUROPEAN PATENT SPECIFICATION**

(45) Date of publication of patent specification: **27.08.86**

(51) Int. Cl.⁴: **G 01 N 35/02**

(21) Application number: **83101067.3**

(22) Date of filing: **04.02.83**

(54) Automatic chemical analyzer.

(30) Priority: **13.02.82 JP 21697/82**
**30.08.82 JP 149201/82**

(43) Date of publication of application:
**31.08.83 Bulletin 83/35**

(45) Publication of the grant of the patent:
**27.08.86 Bulletin 86/35**

(84) Designated Contracting States:
**DE FR GB NL**

(56) References cited:
**EP-A-0 037 079**
**US-A-3 549 330**
**US-A-3 917 455**

(73) Proprietor: **Kabushiki Kaisha Toshiba**
**72, Horikawa-cho Saiwai-ku**
**Kawasaki-shi Kanagawa-ken 210 (JP)**

(72) Inventor: **Yamashita, Kiyoshi**
**26, 2-3196, Mihara**
**Ootawara-shi Tochigi-ken (JP)**

(74) Representative: **Henkel, Feiler, Hänzel & Partner**
**Möhlstrasse 37**
**D-8000 München 80 (DE)**

## Description

This invention relates to an automatic chemical analyzer for continuously and quickly analyzing a plurality of samples or items of analysis.

Automatic chemical analyzers are intended to examine and analyze urine, blood or other samples picked up from human bodies or the like to prepare data for diagnosis. A sample, such as urine, blood, etc., is put in a reaction tube, and a given amount of reagent is poured into the reaction tube. The mixture of the sample and the reagent undergoes a reaction at a given temperature for a given period of time. The absorbancy or electric conductivity of the reaction mixture or liquid is measured for the analysis of the sample. In one such prior art automatic chemical analyzer (US—A—3 549 330), a plurality of reaction tubes are arranged in a matrix, and are advanced along a reaction line which is one of the directions of the matrix. A sampling arm spans the reaction tubes perpendicularly to the reaction line. Likewise, a suction arm spans the reaction tubes perpendicular to the reaction line, lying on the down-stream side of the sampling arm with respect to the advancing direction of the reaction tubes. A reagent is distributed to samples in the reaction tubes through a sampling nozzle which is supported by the sampling arm so as to be capable of vertical motion and movement in the longitudinal direction of the arm. Reactions between the reagent and the samples proceed as the reaction tubes injected with the reagent advance toward the suction arm while being immersed in a constant-temperature medium in a thermostatic bath. After the reaction, the resultant reaction mixtures or liquids are sucked through a suction nozzle which is supported on the suction arm so as to be capable of vertical motion and movement in the longitudinal direction of the arm, the mixtures or liquids are then fed to a measuring device for analysis.

In the prior art analyzer thus constructed, it is necessary to provide large-sized arms capable of spanning a group of reaction tubes and a drive mechanism for moving the nozzles along the arms. Also needed is a reagent repository for storing the reagent. Moreover, a long reaction line is required for prolonged-reaction analysis. Under these circumstances, the prior art chemical analyzers inevitably are bulky. Instead of being supported on the arm, the sampling nozzle may be attached to a nozzle board. In this case, however, an operator is expected to choose a specified reaction line depending on the item of analysis and to set the smapling nozzle over the reaction line. Thus troublesome operations will be forced on the operator, and the reaction line may possibly to mistaken. Since the sampling nozzle need be transferred, a long tube is required for connecting the nozzle and the reagent repository. As a result, the reagent may be left in the tube to be wasted.

An object of this invention is to provide an automatic chemical analyzer in which vessels individually containing a sample and a reagent are arranged on the same line so that the vessels are moved along the arrangement line for pouring of the reagent to the sample and sucking of a reaction mixture.

Another object of the invention is to provide a compact automatic chemical analyzer capable of continuous, speedy analysis of a plurality of samples or items of analysis without wasting a reagent.

Still another object of the invention is to provide a compact automatic chemical analyzer capable of prolonged-reaction analysis.

A further object of the invention is to provide an automatic chemical analyzer ensuring reduction of defective analysis due to an operator's mistake.

The invention is as set out in claim 1.

Embodiments of the invention are claimed in the dependant claims 2—12.

This invention can be more fully understood from the following detailed description when taken in conjunction with the accompanying drawings, in which:

Fig. 1 is a schmatic view showing an automatic chemical analyzer according to the first embodiment of the present invention;

Fig. 2 is a side view partially in section illustrating a thermostatic bath used in the first embodiment and its neighboring portions;

Fig. 3 is a schematic view showing an automatic chemical analyzer according to the second embodiment of the present invention; and

Fig. 4 is a side view partially in section illustrating a thermostatic bath used in the second embodiment and its neighboring portions.

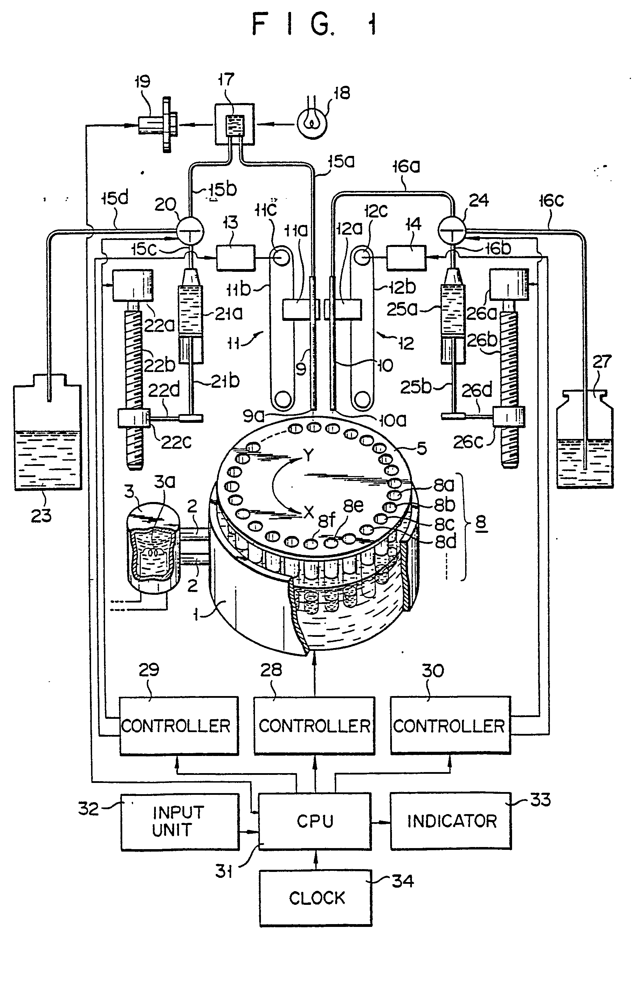

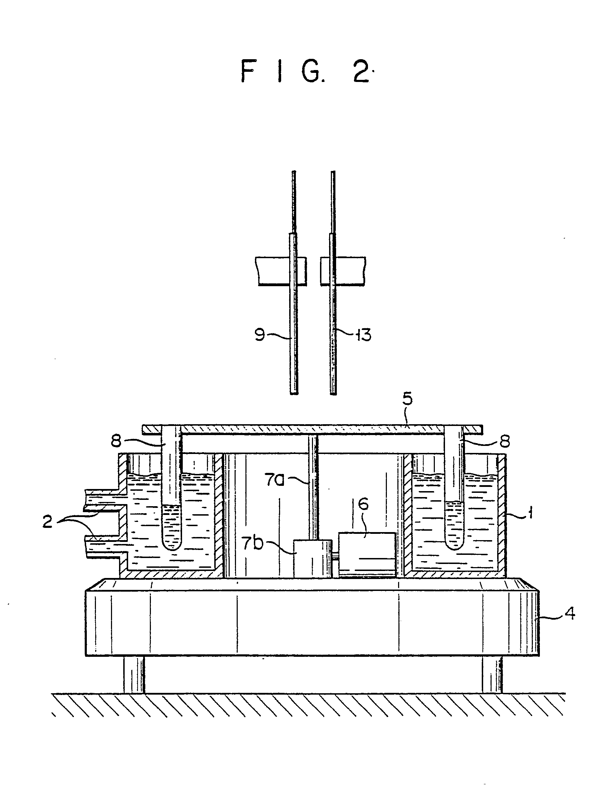

Fig. 1 is a schematic general view of an automatic chemical analyzer according to one embodiment of this invention, and Fig. 2 is a side view partially in section illustrating a thermostatic bath and is neighboring portions. The automatic chemical analyzer comprises the thermostatic bath 1 and a discoid reaction tube holder 5. The thermostatic bath 1 is U-shaped in section and ring-shaped as a whole, and is mounted on a suitable base 4. A constant-temperature medium such as water is stored in the thermostatic bath 1. Pipes 2 is coupled to the outer side wall of the thermostatic bath 1. The thermostatic bath 1 and a heating section 3 of the water as the constant-temperature medium are connected by means of the pipes 2. A heater 3a is housed in the heating section 3 to heat the water in the heating section 3. By controlling the power supply to the heater 3a, the water in the thermostatic bath 1 is kept at a predetermined temperature, e.g., 37°C. A shaft 7a is fixed at right angles to the center of the under surface of the reaction tube holder 5. The lower end of the shaft 7a is detachably and rotatably fitted in joint 7b which is mounted on the base 4 in the center of the thermostatic bath 1. A motor 6 capable of intermittent forward and reverse rotation is set on the base 4 so that the motor shaft engages the lower end portion of the shaft 7a at the joint 7b. Thus, with the shaft 7a fitted in the joint 7b, the reaction tube holder 5 intermittently rotates in the directions indicated by arrows X and Y (counterclockwise and clockwise directions) at a given angular stroke around the fixing portion of the shaft 7a as the motor 6 rotates. A plurality of reaction tubes 8 (8a, 8b, 8c, 8d, ...) are detachably attached to the peripheral edge portion of the reaction tube holder 5. The reaction tube 8, which are each in the form of a bottomed cylinder, are arranged in a loop or an endless line along the circumference of a circle around the center of the reaction tube holder 5. When the reaction tube holder 5 is attached to the joint 7b, the reaction tubes 8 are located substantially along the circular line in the center of a ring-like portion storing the water of the thermostatic bath 1 so that their lower half portions are immersed in the water. Although the reaction tubes 8 are arranged at regular intervals in the example illustrated, they need not always be so. In the example illustrated, moreover, the upper end portions of the reaction tubes 8 are supported by the reaction tube holder 5. Alternatively, however, tumbler-shaped reaction vessels may be put on a supporting plate. In this case, the supporting plate is also immersed in the water in the thermostatic bath 1. At least one reagent, a standard sample, and at least one sample as an object of examination extracted from a human body or the like are individually contained in the reaction tubes 8. If there are a plurality of items of analysis, specified reagents are individually put in the reaction tubes 8 for the several items. In the example illustrated, pure water, a reagent, and a standard sample such as a standard serum are stored in the reaction tubes 8a, 8b and 8d, respectively. The reaction tube 8c is blank and the reaction tubes 8e, 8f, ... are loaded individually with a plurality of samples. Different figures, symbols or other identification signs are marked near the reaction tube fitting portions of the top surface of the reaction tube holder 5 so that the kinds or classes of the reagents or samples in the reaction tubes may be identified with ease.

The reaction tubes 8 move along their arrangement line as the reaction tube holder 5 rotates. Arranged right over the arrangement line of the reaction tubes 8 are a cylindrical suction body 9 with a suction nozzle 9a at the bottom, and a cylindrical sampling body 10 with a sampling nozzle 10a at the bottom, both bodies extending vertically. The suction body 9 and the sampling body 10 are supported to be vertically movable by supporting devices 11 and 12, respectively, so that the distance between them is equal to the distance between the centers of each two adjacent reaction tubes 8. However, the distance between the two bodies 9 and 10 need not always be equal to the arrangement pitch of the reaction tubes 8, and may correspond to any multiple of the pitch, e.g., double or triple. The supporting device 11 includes a pair of pulleys 11c facing vertically, a belt 11b stretched between the pulleys 11c, and a supporting member 11a fixed to a suitable portion of the belt 11b. The supporting member 11a fixedly supports the suction body 9 in a vertical position. The rotation shaft of a reversible motor 13 is coupled to the upper pulley 11c. As the motor 13 rotates, therefore, the suction body 9 moves up and down. When the suction body 9 descends, the suction nozzle 9a plunges into the liquid in one of the reaction tubes 8. When the suction body 9 ascends, the suction nozzle 9a withdraws upward from the reaction tube 8. The supporting device 12 includes a pair of pulleys 12c facing vertically, a belt 12b stretched between the pulleys 12c, and a supporting member 12a fixed to a suitable portion of the belt 12b. The supporting member 12a fixedly supports the sampling body 10 in a vertical position. The rotation shaft of a reversible motor 14 is coupled to the upper pulley 12c. As the motor 14 rotates, therefore, the sampling body 10 moves up and down. When the sampling body 10 descends, the sampling nozzle 10a plunges into one of the reaction tubes 8. When the sampling body 10 ascends, the sampling nozzle 10a withdraws upward from the reaction tube 8.

Means for measuring absorbancy or electric conductivity is coupled to the suction body 9. In the example illustrated, a measuring cell 17 of an absorbancy measuring device is connected to the upper end portion of the suction body 9 by means of a tube 15a such as a silicone tube. The cell 17 is coupled by means of a tube 15b to a selector valve 20 for switching the direction of fluid flow. The selector valve 20 is connected with tubes 15c and 15d, which are connected to a plunger pump 21a and are led into a waste fluid vessel 23, respectively. The selector valve 20 connects the plunger pump 21a selectively with the cell 17 or the waste fluid vessel 23.

In the absorbancy measuring device, a light source 18 and a photodetector 19 are individually arranged on both sides of the cell 17. The cell 17 is filled with the reaction liquid sucked out from each reaction tube 8 through the suction nozzle 9a. A light beam from the light source 18 is applied to the cell 17 filled with the reaction liquid, and the photodetector 19 detects the quantity of light transmitted through the reaction liquid. The quantity of transmitted light is converted into an electric signal by the photodetector 19, and the electric signal is transmitted to a CPU 31 mentioned later.

A screw 22b extends parallel to the stroke of a plunger 21b of the plunger pump 21a. The screw 22b is rotated by a pulse motor 22a. A holder nut 22c is fitted on the screw 22b, and is connected to the lower end of the plunger 21b by means of a rod 22d. As the pulse motor 22a rotates forwardly and reversely, therefore, the screw 22b rotates to move the holder nut 22c up and down. Then, the plunger 21b of the plunger pump 21a moves up and down. When the plunger 21b descends, the liquid is sucked into the plunger pump 21a. When the plunger 21b ascends, the liquid is discharged from the plunger pump 21a.

A selector valve 24 is connected to the upper end portion of the sampling body 10 by means of a tube 16a such as a silicone tube. A plunger pump 25a is connected to the selector valve 24 by means of a tube 16b. A tube 16c connected to the selector valve 24 is led into a pure water vessel 27 containing pure water. The selector valve 24 connects the plunger pump 25a selectively with the sampling body 10 or the pure water vessel 27. A holder nut 26c is connected to a plunger 25b of the plunger pump 25a by means of a rod 26d, and is fitted on a screw 26b which extends parallel to the stroke of the plunger 25b. The screw 26b rotates as a pulse motor 26a rotates forwardly and reversely. Then, the holder nut 26c and the plunger 25b moves up and down. When the plunger 25b descends, the liquid is sucked into the plunger pump 25a. When the plunger 25b ascends, the liquid is discharged form the plunger pump 25a.

A controller 28 for reaction tube transfer controls the operation of the motor 6 for rotating the reaction tube holder 5. The controller 28 receives an actuating signal from CPU 31, and rotates the motor 6 intermittently in the forward and reverse directions. The controller 28 controls the motor 6 so that the reaction tube holder 5 is rotated intermittently by one angle at a time which angle is equal to the central angle between each two adjacent reaction tubes 8. Thus, each specified reaction tube 8 may be located right under the suction body 9 or the sampling body 10.

A suction controller 29 controls the operations of the motor 13 for the vertical motion of the suction body 9 and the pulse motor 22a for actuating the plunger pump 21a to suck the reaction liquid through the suction nozzle 9a. The controller 29 receives an actuating signal from the CPU 31 when the specified reaction tube 8 is located right under the suction body 9. Then, the controller 29 actuates the motor 13 to lower the suction body 9, thereby immersing the suction nozzle 9a in the liquid in the reaction tube 8. Subsequently, the controller 29 switches the selector valve 20 so as to connect the tubes 15b and 15c, and actuates the pulse motor 22a to lower the plunger 21b of the plunger pump 21a by a given distance. Thus, a given amount of the liquid in the reaction tube 8 is sucked through the suction nozzle 9a. The sucked liquid is led into the measuring cell 17 of the absorbancy measuring device to fill the same. Receiving an actuating signal from the CPU 31, the detector 19 measures the aborbancy of the liquid in the cell 17 for approximately thirty seconds, and transmits the detection result to the CPU 31. While the absorbancy is measured, the controller 29 actuates the motor 13 to withdraw the suction body 9 upward from the reaction tube 8. After the thirty seconds for the absorbancy measurement, the controller 29 actuates the pulse motor 22a to further lower the plunger 21b, thereby causing all the liquid in the cell 17 and the tubes 15a and 15b to be sucked into the plunger pump 21a. After the liquid suction, the controller 29 switches the selector valve 20 so as to connect the tubes 15c and 15d. Then, the controller 29 actuates the pulse motor 22a to raise the plunger 21b, thereby forcing out the liquid in the plunger pump 21a into the waste fluid vessel 23. Thus, one cycle of the absorbency measurement by the controller 29 is completed.

A controller 30 controls the operations of the motor 14 for the vertical motion of the sampling body 10 and the pulse motor 26a for actuating the plunger pump 25a to suck in and discharge the liquid in the reaction tube 8. The controller 30 receives an actuating signal for suction from the CPU 31 when the reaction tube 8 containing a specified reagent is located right under the sampling body 10. Then, the controller 30 actuates the motor 14 to lower the sampling body 10, thereby immersing the sampling nozzle 10a in the reagent in the reaction tube 8. Subsequently, the controller 30 switches the selector valve 24 so as to connect the tubes 16a and 16b, and actuates the pulse motor 26a to lower the plunger 25b of the plunger pump 25a by a given distance. Thus, a given amount of the reagent in the reaction tube 8 is sucked through the sampling nozzle 10a. Thereafter, the controller 30 actuates the motor 14 to withdraw the sampling body 10 upward from the reaction tube 8.

When the reaction tube 8 containing the specified sample is located right under the sampling body 10, the controller 30 receives an actuating signal to discharge the reagent from the CPU 31. Then, the controller 30 actuates the motor 14 to lower the sampling body 10, thereby causing the sampling nozzle 10a to plunge into the reaction tube 8. Subsequently, the controller 30 actuates the pulse motor 26a to raise the plunger 25b of the plunger pump 25a by a given distance. Thus, a given amount of the reagent in the sampling body 10 is discharged through the sampling nozzle 10a. Thereafter, the controller 30 actuates the motor 14 to withdraw the sampling body 10 upward from the reaction tube 8.

When supplied with an actuating signal for pure water discharge from the CPU 31, the controller 30 switches the selector valve 24 so as to connect the tubes 16b and 16c, and then lowers the plunger 25b of the plunger pump 25a to suck the pure water from the pure water vessel 27 into the plunger pump 25a. Then, after switching the selector valve 24 so as to connect the tubes 16a and 16b, the controller 30 raises the plunger 25b of th plunger pump 25a by a given distance to discharge a given amount of the pure water in the plunger pump 25a through the sampling nozzle 10a. The pure water is poured from the sampling body 10 to wash the sampling body 10 and the tubes 16a and 16b contaminated by the reagent with pure water, or store the pure water in the reaction tube 8. A reagent may be dispensed into the individual reaction tubes 8 through the sampling nozzle 10a in the same manner as aforesaid by using a reagent vessel storing the reagent in place of the pure water vessel 27.

The controllers 28, 29 and 30 are operated in accordance with a sequence programmed in the CPU 31. The CPU 31 is formed of, for example, a microcomputer. The CPU 31 also calculates the absorbancy using a detection signal for the quantity of transmitted light applied from the detector 19. An input unit 32 for applying various data to the CPU 31 is connected with the CPU 31. An indicator 33 for indicating the result of the absorbancy calculation and the like is also connected with the CPU 31. Furthermore, a clock 34 for the timing of the various actuating signals is supplied to the controllers 28, 29 and 30 is connected with the CPU 31.

There will now be described the operation of the apparatus thus constructed, along with the operating sequence of the CPU 31. First, an operator pours individually into the plurality of reaction tubes 8 attached to the reaction tube holder 5 samples such as blood or urine collected from a plurality of human bodies, at least one reagent, pure water, a standard serum, etc. For example, the pure water, the reagent, the standard serum, a sample, and another sample are poured and stored in the reaction tubes 8a, 8b, 8d, 8e and 8f, respectively. The reaction tube 8c is left blank. The operator applies inputs or identification codes for the reaction tubes corresponding to the kinds of the liquids therein to the CPU 31 by means of the input unit 32. Also, the operator applies an item or items of analysis, such as GOT (glutamate oxalacetate transaminase) measurement, GPT (glutamate pyruvate transaminase) measurement, etc., to the CPU 31 by means of the input unit 32. These various data are delivered from the CPU 31 and indicated by the indicator 33.

When the operation of the CPU 31 is started after the completion of the operator's preparation for the analysis, the CPU 31 first actuates the controller 28 to rotate the reaction tube holder 5 in the direction of the arrow X or Y so that the reaction tube 8a containing the pure water is located right under the suction body 9. Then, the CPU 31 actuates the controller 29 to lower the suction body 9 so that the suction nozzle 9a is immersed in the pure water. The pure water is sucked through the suction nozzle 9a by the plunger pump 21a to fill the measuring cell 17 with the pure water. The quantity of light transmitted through the pure water is measured by the detector 19 for about thirty seconds, and the resultant detection signal is applied to the CPU 31. After the detection of the quantity of transmitted light, the pure water is discharged into the waste fluid vessel 23 by the plunger pump 21a. While the quantity of transmitted light is being measured, the suction body 9 is raised.

During the pure water suction and the light quantity measurement, the CPU 31 delivers an actuating signal for reagent suction to the controller 30. Then, the controller 30 lowers the sampling body 10 to immerse its sampling nozzle 10a in the reagent in the reaction tube 8b. In this embodiment, the distance between the centers of each two adjacent reaction tubes 8 is equal to the distance between the suction body 9 and the sampling body 10, and the pure water and the reagent are contained in the adjacent reaction tubes 8a and 8b, respectively. It is therefore unnecessary to rotate the reaction tube holder 5 in sucking the reagent through the sampling nozzle 10a. However, if the reaction tube containing the pure water is not adjacent to the reaction tube containing the reagent, the CPU 31 rotates the reaction tube holder 5 by means of the controller 28 during the measurement of the absorbancy of the pure water, thereby locating the reaction tube containing the reagent right under the sampling body 10. A given amount of reagent is sucked by the plunger pump 25a through the sampling nozzle 10a immersed in the reagent, and then the sampling body 10 is withdrawn upward from the reaction tube 8b.

The CPU 31 supplies an actuating signal to the controller 28 to rotate the reaction tube holder 5 for one step in the direction of the arrow X, thereby locating the blank reaction tube 8c right under the sampling body 10. Then, the CPU 31 applies an actuating signal for reagent discharge to the controller 30, and the sampling body 10 is lowered so that is sampling nozzle 10a plunges into the reaction tube 8c. The reagent in the sampling body 10 is discharged into the reaction tube 8c by the plunger pump 25a. Then, the CPU 31 supplies an actuating signal for pure water discharge to the controller 30. The selector valve 24 is switched, and the pure water in the pure water vessel 27 is sucked into the plunger pump 25a. Then, the selector valve 24 is shifted again, and a given amount of the pure water in the plunger pump 25a is discharged through the sampling nozzle 10a into the reaction tube 8c. Thereafter, the sampling body 10 is withdrawn upward from the reaction tube 8c.

The CPU 31 applies actuating signal to the controller 28 to rotate the reaction tube holder 5 for one step in the direction of the arrow X, thereby locating the reaction tube 8c right under the suction body 9. Then, the CPU 31 applies an actuating signal to the controller 29, and the quantity of light transmitted through the reagent diluted with the pure water is measured in the same manner as aforesaid. After the suction, the suction body 9 withdraws upward from the reaction tube 8c.

Thus, the quantity of transmitted light for the pure water and reagent is blank-measured, and the resultant data are applied to the CPU 31. The data are used for preparing a calibration curve for calculating the absorbancy of the reaction liquids.

The CPU 31 delivers an actuating signal to the controller 28 to rotate the reaction tube holder 5 in the direction of the arrow Y, thereby locating the reaction tube 8b containing the reagent right under the sampling body 10. Then the CPU 31 delivers an actuating signal for reagent suction to the controller 30 to suck the reagent into the sampling body 10. Subsequently, the CPU 31 supplies an actuating signal to the controller 28 to rotate the reaction tube holder 5 in the direction of the arrow X, thereby locating the reaction tube 8d containing the standard serum right under the sampling body 10. Thereafter, the CPU 31 alternately delivers actuating signals for reagent discharge to the controller 30 and actuating signals for holder rotation to the controller 28 at predetermined time intervals. Thus, the discharge of the reagent from the sampling nozzle 10a by a given amount at a time and the rotation of one step of the reaction tube holder 5 in the direction of the arrow X are alternately achieved to dispense the reagent to the standard serum and the individual samples. The time for the pouring of the reagent to the standard serum and the samples are stored in the CPU 31, respectively.

Since the reaction tubes 8 are held in the thermostatic bath 1, biochemical reactions between the reagent and the standard serum or the samples start at the instant that the reagent is poured. When a predetermined biochemical reaction time passes after the reagent is poured into the standard serum, the CPU 31 supplies an actuating signal to the controller 28 to locate the reaction tube 8d containing the reaction mixture of the standard serum and the reagent right under the suction body 9. The predetermined biochemical reaction time may be set at the end of the biochemical reaction or in the middle of the reaction. The biochemical reaction time is determined suitably according to the item or object of analysis. The CPU 31 alternately delivers actuating signals for the controllers 29 and 28. The actuating signals for the controller 29 are delivered at the same time intervals as those for the reagent dispencing. Accordingly, both the standard serum and the samples are measured for the quantity of transmitted light by the absorbancy measuring device after undergoing biochemical reactions with the reagent in the thermostatic bath 1 for a predetermined time. The measurement result is applied from the detector 19 to the CPU 31. It is to be desired that the reaction tube holder 5 should be kept rotating during the progress of the biochemical reaction. The rotation of the reaction tube holder 5 vibrates the reaction tubes 8 so that the mixtures of the reagent and the standard serum or samples are stirred for uniform reaction. Moreover, the water in the thermostatic bath 1 is fully stirred by the movement of the reaction tubes 8 for uniform temperature distribution. Thus, the analyzing accuracy is improved. The CPU 31 calculates the absorbancy of each sample from the inputted quantity of light transmitted through the reaction mixture of the standard serum or sample and reagent. First, the CPU 31 prepares a calibration curve for absorbancy in accordance with the quantity of light transmitted through the reaction mixture of the reagent and the standard serum, and the previously detected quantities of light transmitted through a pure water blank and a reagent blank. On the basis of the calibration curve, the CPU 31 calculates the absorbancy of each sample from the quantity of light transmitted through the reaction mixture of the reagent and the sample. The absorbancy of the sample thus obtained is delivered from the CPU 31 to the indicator 33 to be indicated thereby.

In the analysis of an item for which the reagent-sample reaction time is long, the reaction tube holder 5 fitted with the reaction tubes is detached from the analyzer body by disengaging the shaft 7a from the joint 7b after pouring the reagent into the reaction tubes. The reaction tube holder 5 is transferred to another thermostatic bath independent of the first bath 1 so that the reaction tubes with the reagent therein are immersed in a constant-temperature medium in the second thermostatic bath kept at a given biochemical reaction temperature. Then, before the passage of a given reaction time, the reaction tube holder 5 is set again in the analyzer body, and the suction of the reaction mixture and the measurement of the quantity of transmitted light are performed by the suction body 9 and the absorbancy measuring device, respectively, in the aforementioned manner. By doing this, in the analyzer of the invention, an analyzing process, such as reagent distribution or reaction mixture absorbancy measurement, may be executed for one group of samples during the reaction time for the reagent and another group of samples. Thus, the automatic chemical analyzer can be used effectively.

In the embodiment described above, the absorbancy is measured for a single item of analysis by the use of a single reagent. Alternately, two or more reagents may be stored individually in the reaction tubes so that one-shot analysis may be achieved for a plurality of items of analysis. In other words, a plurality of analyzing processes can be executed by the use of a single reaction channel. Only the absorbancy is measured in the above embodiment. However, a plurality of analyzing processes may be executed in one stroke by adding various other measuring systems, such as a conductivity measuring device, to the absorbancy measuring device including the measuring cell 17 and detector 19. In this case, a reaction mixture sucked through a single suction body may be divergently supplied to two or more measuring systems. Alternatively, however, a plurality of suction bodies may be arranged over the arrangement line of the reaction tubes so that reaction mixtures sucked through the individual suction bodies may be supplied to several measuring systems. In the foregoing embodiment, moreover, the analyzer has a single sampling body. By the use of a plurality of sampling bodies, however, two or more reaction tubes may be injected at a time to improve the processing speed. In the above embodiment, the reaction tube holder 5 rotates in both the directions of the arrows X and Y. Since the reaction tubes are arranged in an endless manner, however, the operations for the distribution and suction may be performed satisfactorily if the reaction tube holder is so designed as to rotate in one of those directions.

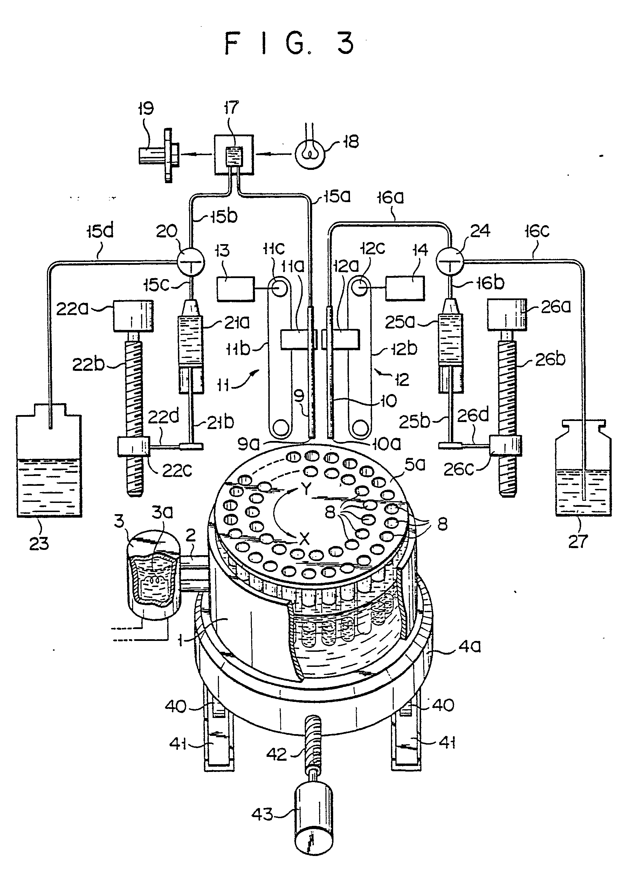

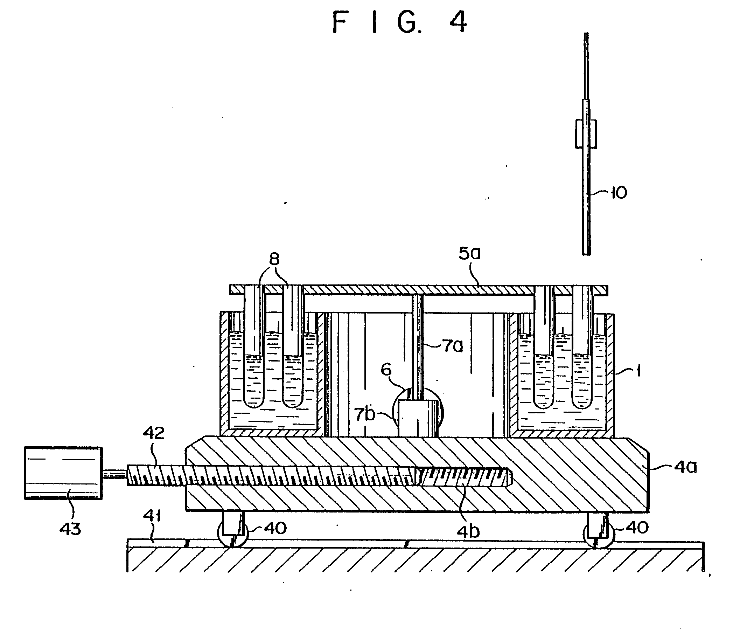

Figs. 3 and 4 show another embodiment of this invention. In Fig. 3, the control block diagram shown in Fig. 1 is omitted. In Figs. 3 and 4, like reference numerals are used to designate the same portions as shown in Figs. 1 and 2. Two pairs of truck wheels 40 are attached to the under surface of a base 4a. A pair of rails 41 extending in the direction normal to the facing direction of the suction body 9 and the sampling body 10 are laid on a supporting member 44. The truck wheels 40 are fitted to the rails 41 in a rollable manner. Thus, guided by the rails 41, the base 4a and the thermostatic bath 1 moves in the direction normal to the facing direction of the suction body 9 and the sampling body 10. A female screw 4b is formed halfway between the upper and lower surfaces of the base 4a, extending in the same direction as the rails 41. A reversible motor 43 is fixed on another suitable supporting member (not shown) which is fixed to the support member 44. A male screw 42 is attached to the extreme end of the rotation shaft of the motor 43, and is fitted in the female screw 4b. As the motor 43 rotates, therefore, the base 4a and the thermostatic bath 1 reciprocate along the extending direction of the rails 41.

Attached to a reaction tube holder 5a are a plurality of reaction tubes 8 which are arranged on the circumference of each of two concentric circles around the fitting position of the shaft 7a of the reaction tube holder 5. The reaction tubes 8 arranged on the inner and outer arrangement lines are all located in the thermostatic bath 1, with their lower-half portions immersed in the constant-temperature medium in the bath 1.

In this embodiment, the reaction tube holder 5a rotates intermittently around the fitting position of the shaft 7a as the motor 6 rotates. While the reaction tube holder 5a is rotating, the reagent dispensing, the reaction mixture suction, and the absorbancy measurement are achieved in the aforesaid manner. As the motor 43 rotates, moreover, the base 4a, the thermostatic bath 1, and the reaction tube holder 5a moves in the direction normal to the facing direction of the suction body 9 and the sampling body 10. Accordingly, when the outer arrangement line of the reaction tubes 8 is right under the suction and sampling bodies 9 and 10, the dispensing or suction for the outside reaction tubes 8 is performed. When the inner arrangement line is right under the bodies 9 and 10, the dispensing or suction for the inside reaction tubes 8 is executed. As compared with embodiment of Fig. 1, therefore, the analyzer of this second embodiment can make one-shot analysis with use of a greater number of reagents for a greater number of samples. Since the rotation of the motor 43 for shifting the reaction tube arrangement line can be controlled by the CPU 31, all the analytical operations can be performed automatically, and are less liable to an operator's mistake. Even if the reaction tube arrangement line of the reaction tube holder is one in number (as in Fig. 1), the relative positions of the reaction tubes and the two operative bodies 9 and 10 may readily be adjusted by designing the analyzer so that the reaction tube holder as a whole can move in the direction normal to the facing direction of the bodies 9 and 10, as mentioned before. The reaction tube holder may be transferred manually without using the motor 43 for the automatic transfer.

In the aforementioned embodiments, the reaction tube arrangement lines are circular. Alternatively, the reaction tubes may be set at regular intervals with a belt conveyor which moves horizontally along an elliptic line. In this case, the reaction tube arrangement line is elliptic.

According to this invention, reaction tubes containing reagent(s) and sample(s) are arranged on the same line to be moved along the same for dispensing and suction. Unlike the prior art analyzer, the analyzer of the invention does not require any reagent repository beside the reaction tubes. Since the suction and sampling bodies move only in the vertical direction, it is unnecessary to provide arms for their horizontal movements. Thus, the analyzer may be small-sized, simple construction, and reduced in cost. Since the suction and sampling bodies move only within a short vertical stroke, the tubes connecting them with the measuring device of plunger pumps may be shortened. Accordingly, the amount of reagent to remain in the tubes and hence the total reagent consumption will be reduced. The analyzing accuracy of the analyzer is high since a calibration curve required for the calculation of absorbancy and the like is prepared for each analyzing process. The rotation of the reaction tube holder, the vertical transfer of the sampling and suction bodies, the suction or discharge by the plunger pumps, and the measurement are executed automatically on the basis of a program set in the CPU 31. Accordingly, an operator is less frequently required to manipulate the analyzer during the analyzing operation, so that defective analysis due to mistaken operation can be reduced substantially. With a plurality of reagents stored individually in the reaction tubes, a multitude of items of analysis may be executed on a compact analyzer. The working efficiency of the analyzer may be improved by removably attaching the reaction tube holder to the analyzer body.

**Claims**

1. An automatic analyzer wherein a reagent and a sample are mixed to undergo reaction and wherein means are provided for measuring a specified property of the reaction mixture the analysis comprising: a plurality of vessels (8) for individually containing substances consisting of at least one reagent, at least one sample and a mixture thereof; a discoid holder (5, 5a) for supporting the vessels and having a holding plane and a circular arrangement line on the holding plane along which the vessels are arranged; driving means (6) for rotating the holder about an axis passing through the center of the arrangement line of the vessels perpendicularly to the holding plane of the holder; temperature maintaining means (1) for maintaining a fixed temperature of the substances stored in the vessels; suction means including a suction body (9) having at a lower end portion thereof a suction nozzle (9a) located over the arrangement line, and a first suction section (21a) coupled with the suction body (9) for sucking the mixtures in the vessels (8) through the suction nozzle (9a); suction body supporting means (11) for supporting the suction body for vertical motion so that the suction body plunges into each vessel when lowered and withdraws upwardly from the vessel when raised; sampling means including a sampling body (10) having at a lower end portion thereof a sampling nozzle (10a) located over the arrangement line, and a second suction section (25a) connected with the sampling body for sucking and discharging the substances through the sampling nozzle (10a) to mix them; and sampling body supporting means (12) for supporting the sampling body for vertical motion so that the sampling body plunges into each vessel when lowered and withdraws from the vessel when raised, characterised in that said holder (5, 5a) is engageable with, and disengageably from, the driving means (6), and the measuring means (17, 18, 19) is provided between the suction body (9) and the first suction section (21a) for measuring the specified property of the substance sucked in through the suction nozzle (9a) from the vessel (8).

2. The automatic chemical analyzer according to claim 1, characterized in that the discoid holder (5) is fitted with the plurality of vessels arranged on a circular line along the peripheral edge portion thereof.

3. The automatic chemical analyzer according to claim 1, characterized in that each said vessel is a bottomed cylindrical reaction tube (8) supported at the upper end portion by the holder (5) so that the longitudinal direction of the reaction tube is vertical.

4. The automatic chemical analyzer according to claim 1, characterized in that the discoid holder (5a) is fitted with the plurality of vessels arranged on two concentric circular lines along the peripheral edge portion thereof.

5. The automatic chemical analyzer according to claim 4, characterized in that said holder (5a) can move in a direction normal to the facing direction of the suction nozzle and the sampling nozzle so that the outer or inner circular line may selectively be located right under the nozzles.

6. The automatic chemical analyzer according to claim 1, characterized in that the said first suction section includes a plunger pump (21a) and separate tubes (15a, 15b, 15c), and said measuring means (17) is coupled to the suction body (9) and the plunger pump by means of the separate tubes.

7. The automatic chemical analyzer according to claim 6, characterized in that the tube (15b, 15c) connecting the measuring means and the plunger pump is fitted with a selector valve (20) coupled with a tube (15d) which is led into a waste water vessel (23), so that said selector valve connects the plunger pump selectively with the measuring means or the waste water vessel.

8. The automatic chemical analyzer according to claim 7, characterized in that said suction means includes a screw rod (22b) extending parallel to the stroke of the plunger (21b) of the plunger pump (21a), a holder nut (22c) screwed on the screw rod and fixed to the plunger, and a motor (22a) for rotating the screw rod forwardly and reversely, so that said plunger pump performs sucking or discharging operation as the motor rotates.

9. The automatic chemical analyzer according to claim 1, characterized in that said second suction section includes a plunger pump (25a) and a tube (16a, 16b), and said sampling body (10) is coupled to the plunger pump by means of the tube.

10. The automatic chemical analyzer according to claim 9, characterized in that the tube (16a, 16b) connecting the sampling body and the plunger pump is fitted with a selector valve (24) coupled with a tube (16c) which is led into a pure water vessel (27) containing pure water, so that said selector valve connects the plunger pump selectively with the sampling body or the pure water vessel.

11. The automatic chemical analyzer according to claim 10, characterized in that said sampling means includes a screw rod (26b) extending parallel to the stroke of the plunger (25b) of the plunger pump (25a), a holder nut (26c) screwed on the screw rod and fixed to the plunger, and a motor (26a) for rotating the screw rod forwardly and reversely, so that said plunger pump performs sucking or discharging operation as the motor rotates.

12. The automatic chemical analyzer according to claim 1, characterized in that said temperature maintaining means includes a thermostatic bath (1) containing a constant-temperature medium kept at a fixed temperature, and at least part of each said vessel (8) is immersed in the constant-temperature medium.

**Patentansprüche**

1. Einrichtung zur automatischen chemischen Analyse, bei welcher ein Reagens und eine Probe zur Reaktion oder Umsetzung vermischt werden und bei welcher eine Einrichtung zur Messung einer spezifizierten Eigenschaft des Reaktionsgemisches vorgesehen ist, umfassend: eine Anzahl von Gefäßen (8), die jeweils Substanzen aus mindestens einem Reagenz, mindestens einer Probe und einem Gemisch derselben aufnehmen; einen zur Halterung der Gefäße dienenden scheibenförmigen Halter (5, 5a) mit einer Halteebene und einer auf dieser vorgesehenen kreisförmigen Anordnungsreihe, längs welcher die Gefäße angeordnet sind; eine Antriebseinrichtung (6) zum Drehen des Halters um eine Achse, welche durch das Zentrum der Anordnungsreihe der Gefäße senkrecht zur Halteebene des Halters verläuft; eine Temperatureinhaltungseinrichtung (1) zum Einhalten einer festen Temperatur der in den Gefäßen untergebrachten Substanzen; eine Ansaugeinrichtung mit einem Saugkörper (9), der an einem unteren Endabschnitt eine über der Anordnungsreihe befindliche Saugdüse (9a) aufweist, und einem mit dem Saugkörper (9) gekoppelten ersten Ansaugteil (21a) zum Ansaugen der

in den Gefäßen (8) enthaltenen Gemische über die Saugdüse (9a); eine Saugkörpers-Trageinrichtung zur Halterung des Saugkorpers für lotrechte Bewegung, so daß der Saugkörper beim Abwärtsbewegen in jedes Gefäß eintaucht und sich beim Aufwärtsbewegen nach oben aus dem Gefäß zurückzieht; eine Probennahmeeinrichtung mit einem Probennahmekörper (10), der an einem unteren Endabschnitt eine über der Anordnungsreihe angeordnet Probennahmedüse (10a) aufweist, und einem mit dem Probennahmekörper verbundenen zweiten Ansaugteil (25a), der mit dem Probennahmekörper für das Ansaugen und Austragen der Substanzen über die Probennahmedüse (10a) zum Vermischen der Substanzen verbunden ist; und eine Probennahmekörper-Trageinrichtung (12) zur Halterung des Probennahmekörpers für lotrechte Bewegung, so daß der Probennahmekörpers bei Abwärtsbewegung in jedes Gefäß eintaucht und sich bei Aufwärtsbewegung aus dem Gefäß zurückzieht, dadurch gekennzeichnet, daß der Halter (5, 5a) mit der Antriebseinrichtung (6) in und außer Eingriff bringbar ist und die Meßeinrichtung (17, 18, 19) zwischen dem Saugkörper (9) und dem ersten Ansaugteil (21a) angeordnet ist zwecks Messung der spezifizierten Eigenschaft der über die Saugdüse (9a) aus dem Gefäß (8) angesaugten Substanz.

2. Einrichtung zur automatischen chemischen Analyse nach Anspruch 1, dadurch gekennzeichnet, daß der scheibenförmige Halter (5) mit der Vielzahl von Gefäßen ausgestattet ist, die auf einer kreisförmigen Linie längs des Umfangsrandabschnitts des Halters angeordnet sind.

3. Einrichtung zur automatischen chemischen Analyse nach Anspruch 1, dadurch gekennzeichnet, daß jedes Gefäß ein mit einem Boden versehener zylindrischer Reacktionskolben (8) ist, der am oberen Endabschnitt durch den Halter (5) so gehalten wird, daß die Längrichtung des Reaktionskolbens lotrecht verläuft.

4. Einrichtung zur automatischen chemischen Analyse nach Anspruch 1, dadurch gekennzeichnet, daß der scheibenförmige Halter (5a) mit der Vielzahl von Gefäßen ausgestattet ist, die in zwei konzentrischen Kreislinien längs des Umfangsrandabschnitts des Halters angeordnet sind.

5. Einrichtung zur automatischen chemischen Analyse nach Anspruch 4, dadurch gekennzeichnet, daß der Halter (5a) in einer Richtung senkrecht zu der der Saugdüse zugewandten Richtung bewegbar ist, so daß selektiv die äußere oder die innere Kreislinie unmittelbar unter die Düsen bringbar ist.

6. Einrichtung zur automatischen chemischen Analyse nach Anspruch 1, dadurch gekennzeichnet, daß der erste Ansaugteil eine Kolbenpumpe (21a) und getrennte Röhren (15a, 15b, 15c) aufweist und die Meßeinrichtung (17) mittels der getrennten Röhren an den Saugkörper (9) und die Kolbenpumpe angeschlossen ist.

7. Einrichtung zur automatischen chemischen Analyse nach Anspruch 6, dadurch gekennzeichnet, daß die die Meßeinrichtung und die Kolbenpumpe verbindende Röhre (15b, 15c) mit einem Wählventil (20) ausgestattet ist, das mit einer in ein Abwassergefäß (23) führenden Röhre (15d) verbunden ist, so daß das Wählventil die Kolbenpumpe selektiv zum der Meßeinrichtung oder mit dem Abwassergefäß verbindet.

8. Einrichtung zur automatischen chemischen Analyse nach Anspruch 7, dadurch gekennzeichnet, daß die Ansaugeinrichtung eine sich parallel zum Hub des Kolbens (21b) der Kolbenpumpe (21a) erstreckende Schraubspindel (22b), eine auf die Schraubspindel aufgeschraubte und fest mit dem Kolben verbundene Haltermutter (22c) und einen Motor (22a) für Vorwärts- und Rückwärtsdrehung der Schraubspindel, so daß die Kolbenpumpe bei der Drehung des Motors einen Ansaug-oder einen Austragvorgang durchführt, aufweist.

9. Einrichtung zur automatischen chemischen Analyse nach Anspruch 1, dadurch gekennzeichnet, daß der zweite Ansaugteil eine Kolbenpumpe (25a) und eine Röhre (16a, 16b) aufweist und der Probennahmekörper (10) mittels der Röhre mit der Kolbenpumpe verbunden ist.

10. Einrichtung zur automatischen chemischen Analyse nach Anspruch 9, dadurch gekennzeichnet, daß die den Probennahmekörper und die Kolbenpumpe verbindende Röhre (16a, 16b) mit einem Wählventil (24) versehen ist, das an eine in ein reines Wasser enthaltendes Reinwassergefäß (27) führende Röhre (16c) angeschlossen ist, so daß das Wählventil die Kolbenpumpe selektiv mit dem Probennahmekörper oder mit dem Reinwassergefäß verbindet.

11. Einrichtung zur automatischen chemischen Analyse nach Anspruch 10, dadurch gekennzeichnet, daß die Probennahmeeinrichtung eine sich parallel zum Hub des Kolbens (25b) der Kolbenpumpe (25a) erstreckende Schraubspindel (26b), eine auf die Schraubspindel aufgeschraubte und fest mit dem Kolben verbundene Haltermutter (26c) sowie einen Motor (26a) für Vorwärts- und Rückwärtsdrehung der Schraubspindel, so daß die Kolbenpumpe bei der Drehung des Motors einen Ausaug- oder einen Austrag- vorgang durchführt, aufweist.

12. Einrichtung zur automatischen chemischen Analyse nach Anspruch 1, dadurch gekennzeichnet, daß die Temperatureinhaltungseinrichtung ein thermostatisches Bad (1), das ein auf einer festen Temperatur gehaltenes Konstant-temperaturmedium enthält, aufweist und mindestens ein Teil jedes Gefäßes (8) in das Konstanttemperaturmedium eintaucht.

**Revendications**

1. Appareil automatique d'analyse chimique, où un réactif et un échantillon sont mélangés pour subir une réaction et où des moyens sont prévus pour mesurer une propriété particulière du mélange de réaction, l'analyseur comprenant: plusieurs récipients (8) destinés à contenir de manière distincte des substances constituées d'au moins un réactif, au moins un échantillon et un mélange de ceux-ci; un support en forme de disque (5, 5a) servant à porter les récipients et possédant un plan de support et une ligne de traitement circulaire disposée sur le plan de support et suivant laquelle les récipients sont placés; un moyen d'entraînement (6) servant à faire tourner le support sur un axe passant par le centre de la ligne de traitement des récipients perpendiculairement au plan de support du support; un moyen (1) de maintien de la température qui maintient une température fixe pour les substances emmagasinées dans les récipients; un moyen d'aspiration comportant un corps d'aspiration (9) possédant, à son extrémité inférieure, une buse d'aspiration (9a) disposée au-dessus de la ligne de traitement, et une première section d'aspiration (21a) couplee avec le corps d'aspiration (9) afin d'aspirer les mélanges se trouvant dans la récipients (8) par l'intermédiaire de la buse d'aspiration (9a); un moyen (11) de support du corps d'aspiration servant porter le corps d'aspiration suivant un déplacement vertical de sorte que le corps d'aspiration plonge dans chacun des récipients lorsqu'il est abaiseé et remonte en s'écartant du récipient lorsqu'on le soulève; un moyen d'échantillonnage comportant un corps d'échantillonage (10) qui possède à son extrémité inférieure une buse d'échantillonnage (10a) placée au-dessus de la ligne de traitement, et une deuxième section d'aspiration (25a) connectée avec le corps d'èchantillonnage afin d'aspirer et décharger les substances par l'intermédiaire de la buse d'échantillonnage (10a) pour les mélanger; et un moyen (12) de support du corps d'échantillonnage servant à porter le corps d'échantillonnage sur un déplacement vertical de sorte que le corps d'échantillonnage plonge dans chaque récipient lorsqu'on l'abaisse et le retire du récipient lorsqu'on le soulève; caractérisé en ce que ledit support (5, 5a) peut être mis en prise avec le moyen d'entraînement (6), et en être séparé, et le moyen de mesure (17, 18, 19) est placé entre le corps d'aspiration (9) et la première section d'aspiration (21a) afine de mesurer la propriété spécifique de la substance aspirée via la buse d'aspiration (9a) dans le récipient (8).

2. Appareil automatique d'analyse chimique selon la revendication 1, caractérisé en ce que le support en forme de disque (5) est doté de plusieurs récipients disposés sur une ligne circulaire suivant son bord périphérique.

3. Appareil automatique d'analyse chimique selon la revendication 1, caractérisé en ce que chaque récipient ent un tube de réaction cylindrique (8) possédant un fond et porté, au niveau de son extrémité supérieure, par le support (5) de façon que la direction longitudinale du tube de réaction soit verticale.

4. Appareil automatique d'analyse chimique selon la revendication 1, caractérisé en ce que le support en forme de disque (5a) est doté de plusieurs récipients disposés sur deux lignes circulaires concentriques le long de son bord périphérique.

5. Appareil automatique d'analyse chimique selon la revendication 4, caractérisé en ce que ledit support (5a) peut se déplacer dans une direction perpendiculaire à la direction de face de la buse d'aspiration et de la buse d'échantillonnage, si bien qu'il est possible de sèlectivement placer la ligne circulaire extérieure ou intérieure juste au-dessous des buses.

6. Appareil automatique d'analyse chimique selon la revendication 1, caractérisé en ce que ladite première section d'aspiration comporte une pompe à plongeur (21a) et des tubes dinstincts (15a, 15b, 15c), et en ce que ledit moyen de mesure (17) est raccordé au corps d'aspiration (9) et à la pompe à plongeur par l'intermédiaire des tubes dinstincts.

7. Appareil automatique d'analyse chimique selon la revendication 6, caractérisé en ce que le tube (15b, 15c) reliant le moyen de mesure et la pompe à plongeur est doté d'une soupape sélectrice (20) couplée avec un tube (15d) qui conduit à un récipient (23) pour eau usée, si bien que ladite soupape sélectrice raccorde sélectivement la pompe à plongeur avec le moyen de mesure ou avec le récipient pour eau usée.

8. Appareil automatique d'analyse chimique selon la revendication 7, caractérisé en ce que ledit moyen d'aspiration comporte une tige filetée (22b) orientée parallélement à la course du plongeur (21b) de la pompe à plongeur (21a), un écrou de maintien (22c) vissé sur la tige filetée et fixé au plongeur, et un moteur (22a) servant à faire tourner la tige filetée vers l'avant et vers l'arrière, de sorte que ladite pompe à plongeur réalise l'aspiration ou la décharge lorsque le moteur tourne.

9. Appareil automatique d'analyse chimique selon la revendication 1, caractérisé en ce que ladite deuxième section d'aspiration comporte une pompe à plongeur (25a) et un tube (16a, 16b) et en ce que ledit corps d'échantillonnage (10) est raccordé à la pompe à plongeur par l'intermédiaire du tube.

10. Appareil automatique d'analyse chimique selon la revendication 9, caractérisé en ce que le tube (16a, 16b) reliant le corps d'échantillonnage et la pompe à plongeur est doté d'une soupape sélectrice (24) couplée avec un tube (16c) qui conduit à un récipient (27) pour eau pure contenant de l'eau pure, si bien que ladite soupape sélectrice raccorde sélectivement la pompe à plongeur avec le corps d'échantillonnage ou avec le récipient d'eau pure.

11. Appareil automatique d'analyse chimique selon la revendication 10, caractérisé en ce que ledit moyen d'échantillonnage comporte une tige filetée (26b) orientée parallèlement à la course du plongeur (25b) de la pompe à plongeur (25a), un écrou de maintien (26c) vissé sur la tige filetée et fixé au plongeur, et un moteur (26a) servant à faire tourner la tige filetée vers l'avant et vers l'arrière, si bien que ladite pompe à plongeur effectue une aspiration ou une décharge lorsque le moteur tourne.

12. Appareil automatique d'analyse chimique selon la revendication 1, caractérisé en ce que ledit moyen de la température comporte un bain thermostatique (1) contenant un milieu à température constante qui est maintenu à une température fixe, et au moins une partie de chaque dit récipient (8) est immergée dans le milieu à température constante.

# F I G. 1

# F I G. 2·

# F I G. 3

F I G. 4